(19) Europäisches Patentamt
European Patent Office
Office européen des brevets

(11) Numéro de publication : **0 001 734**
**B1**

(12) **FASCICULE DE BREVET EUROPÉEN**

(45) Date de publication du fascicule du brevet : **17.06.81**

(51) Int. Cl.³ : **C 08 G 73/12**

(21) Numéro de dépôt : **78420010.7**

(22) Date de dépôt : **06.10.78**

(54) **Polymères à groupements imides, leurs procédés de préparation et leurs applications a la fabrication d'objets divers.**

(30) Priorité : **14.10.77 FR 7731672**

(43) Date de publication de la demande : **02.05.79 (Bulletin 79/09)**

(45) Mention de la délivrance du brevet : **17.06.81 Bulletin 81/24**

(84) Etats contractants désignés : **BE CH DE GB LU NL**

(56) Documents cités :
**CHEMICAL ABSTRACTS, Vol. 82, n° 18, May 5, 1975, abstract n° 112305c B.A. ZHUBANOV : « Polymerization of bismaleimides with aromatic compounds » (KAZ. GOS. UNIV. IM. KIROVA, ALMA-ATA, USSR)**

(73) Titulaire : **RHONE-POULENC INDUSTRIES**
**22, avenue Montaigne**
**F-75008 Paris (FR)**

(72) Inventeur : **Balme, Maurice**
**23, Boulevard du 11 novembre**
**F-69110 - Sainte-Foy Les Lyon (FR)**
Inventeur : **Locatelli, Jean-Louis**
**Les Charavelles Rue de Charavel**
**F-38200 - Vienne (FR)**

(74) Mandataire : **Rioufrays, Roger et al**
**RHONE-POULENC INDUSTRIES Centre de Recherches des Carrières Service Brevets**
**F-69190 Saint-Fons (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 17, rue du Louvre, 75001 Paris, France

EP 0 001 734 B1

Polymères à groupements imides, leurs procédés de préparation et leurs applications à la fabrication d'objets divers

L'invention concerne de nouveaux polymères à base de composés à fonctions imides ainsi que le procédé d'obtention de ces polymères et leur application à la préparation d'articles conformés.

On sait, d'après le brevet français n° 1 555 564, que l'on peut obtenir des polymères thermodurcissables en faisant réagir un bis-imide d'acide dicarboxylique insaturé avec une diamine biprimaire. Le durcissement à la chaleur de ces polymères donne des résines thermostables.

Un des buts de la présente invention est de fournir des polymères à fonctions imides qui, au niveau de l'emploi qui en est fait par moulage sous pression, ne présentent pas les inconvénients des polymères connus antérieurement, notamment l'utilisation d'une technique trop élaborée et l'emploi d'un appareillage difficilement transposable à l'échelle industrielle.

Il a maintenant été trouvé de nouveaux polymères à groupements imides qui, en pouvant être mis en œuvre par simple coulée à l'état fondu, répondent à la satisfaction de cet objectif.

Plus spécifiquement, la présente invention se rapporte à de nouveaux polymères caractérisés en ce qu'ils sont préparés par réaction de :

a) un oligoimide de formule générale :

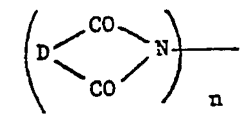

(I)

dans laquelle D représente un radical divalent qui peut être l'un des radicaux de formule :

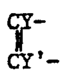 ,

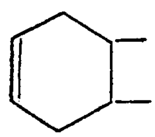

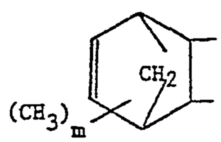

où Y et Y', identiques ou différents, représentent H, $CH_3$, ou Cl et m est égal à 0 ou 1 ; le symbole A représente un radical organique de valence n renfermant jusqu'à 50 atomes de carbone ; et n représente un nombre au moins égal à 1,5 et au plus égal à 5 ;

b) un composé aromatique comportant un ou plusieurs atomes d'hydrogène nucléaires labiles.

Des nouvelles résines améliorées selon l'invention peuvent également être obtenues à partir de :

a) un oligoimide de formule générale :

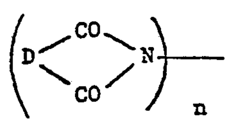

(I)

dans laquelle D, A et n possèdent la signification donnée ci-avant,

b) un composé aromatique comportant un ou plusieurs atomes d'hydrogène nucléaires labiles,

c) une polyamine de formule générale $G(NH_2)_z$ dans laquelle G est un radical organique de valence z, et z est un nombre au moins égal à 2.

S'agissant des oligoimides, on fait appel, de manière préférentielle à des maléimides de formule générale :

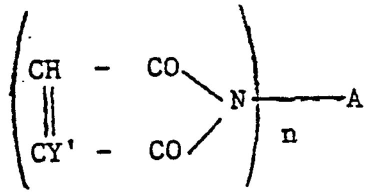

(II)

dans laquelle Y', A et n ont les significations données précédemment.

Dans les formules (I) et (II) précitées, le symbole A peut désigner un radical alcoylène ayant moins de 13 atomes de carbone, un radical phénylène, cyclohexylène, un des radicaux de formules :

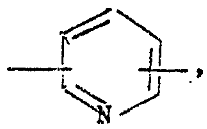 , 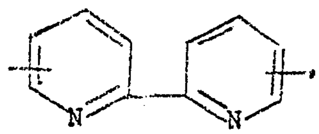 , 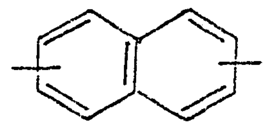 , 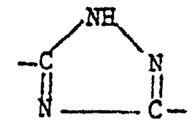

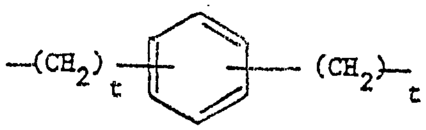

où t représente un nombre entier de 1 à 3 ; le symbole A peut représenter également un radical divalent ayant de 12 à 30 atomes de carbone constitué par des radicaux phénylène ou cyclohexylène reliés entre eux par un lien valentiel simple ou par un atome ou groupement inerte tel que —O—, —S—, un groupement alcoylène ayant de 1 à 3 atomes de carbone, —CO—, —$SO_2$—, —$NR_1$—, —N = N—, —CONH—, —P(O)—$R_1$—, —CONH—X—NHCO—,

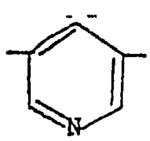 , 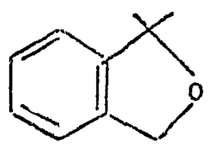 , 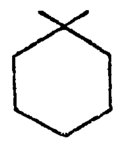 , 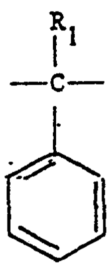 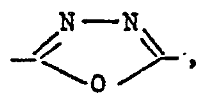 , 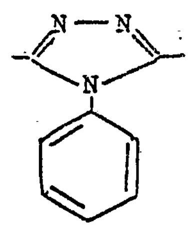

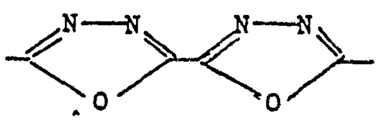 , 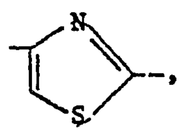 , 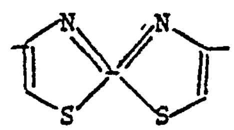 , 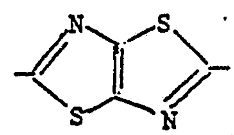 ;

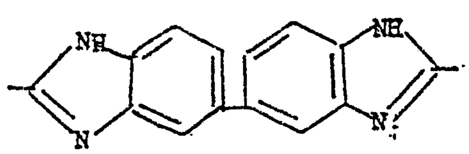

où $R_1$ représente un atome d'hydrogène, un radical alcoyle ayant de 1 à 4 atomes de carbone, phényle ou cyclohexyle, X représente un radical alcoylène ayant moins de 13 atomes de carbone. En outre, les divers radicaux phénylène ou cyclohexylène peuvent être substitués par des groupements tels que $CH_3$, $OCH_3$ ou par un atome de chlore.

Le symbole A peut également représenter un radical, renfermant jusqu'à 50 atomes de carbone, et comportant de 3 à 5 valences libres, ledit radical pouvant être constitué par un noyau naphtalénique, pyridinique ou triazinique, par un noyau benzénique pouvant être substitué par un à trois groupements méthyle, ou par plusieurs noyaux benzéniques reliés entre eux par un atome ou groupement inerte qui peut être l'un de ceux indiqués ci-avant ou encore

$$-\underset{|}{N}- \; , \; -\underset{|}{CH}- \; , \; -O-\underset{|}{P}(O)O-$$

Enfin le symbole A peut représenter un radical alcoyle ou alcényle, linéaire ou ramifié pouvant renfermer jusqu'à 18 atomes de carbone, un radical cycloalcoyle renfermant 5 ou 6 atomes de carbone dans le cycle, un radical aryle mono ou bicyclique, alcoylaryle ou aralcoyle renfermant jusqu'à 18 atomes de carbone, l'un des radicaux :

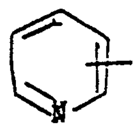 , 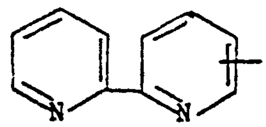 , 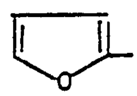 , 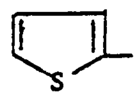

un radical monovalent constitué par un radical phényle et un radical phénylène reliés entre eux par un lien valentiel simple ou par un atome ou groupement inerte tel que —O—, —S—, un radical alcoylène ayant de 1 à 3 atomes de carbone, —CO—, —$SO_2$—, —$NR_1$—, —N = N—, —CONH—, —COO—, —$COOR_1$, ou $R_1$ possède la signification indiquée ci-avant. En outre, ces divers radicaux peuvent être substitués par des atomes, radicaux ou groupements tels que

F, Cl, $CH_3$, $OCH_3$, $OC_2H_5$, OH, $NO_2$, - COOH, - NH-$COCH_3$,

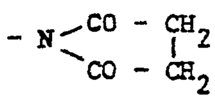 , - $OCOCH_3$,

Il ressort de ce qui précède que le constituant maléimide, choisi de préférence pour conduire le procédé conforme à l'invention, peut être un polymaléimide défini ou un mélange renfermant des maléimides de fonctionnalités différentes. Dans le cas particulier où l'on utilise un mélange comprenant un monomaléimide, la proportion de ce dernier dans le mélange est, de préférence, telle que le nombre de fonctions maléimides apportées par le monomaléimide ne représente pas plus de 30 % du nombre total de fonctions maléimides engagées dans la réaction.

Le maléimide de formule (II) peut notamment être un bis-imide, tel que par exemple :
— le N,N'-éthylène-bis-maléimide
— le N,N'-hexaméthylène-bis-maléimide
— le N,N'-métaphénylène-bis-maléimide
— le N,N'-paraphénylène-bis-maléimide
— le N,N'-4,4', biphénylène-bis-maléimide
— le N,N'-4,4'-diphénylméthane-bis-maléimide
— le N,N'-4,4'-diphényléther-bis-maléimide
— le N,N'-4,4'-diphénylsulfure-bis-maléimide
— le N,N'-4,4'-diphénylsulfone-bis-maléimide
— le N,N'-4,4'-dicyclohexylméthane-bis-maléimide
— le N,N'-α,α'-4,4'-diméthylène cyclohexane-bis-maléimide
— le N,N'-métaxylylène-bis-maléimide
— le N,N'-paraxylylène-bis-maléimide
— le N,N'-4,4'-diphényl-1,1 cyclohexane-bis-maléimide
— le N,N'-4,4'-diphénylméthane-bis-chloromaléimide
— le N,N'-4,4'-diphényl-1,1 propane-bis-maléimide
— le N,N'-4,4'-triphényl-1,1,1 éthane-bis-maléimide
— le N,N'-4,4'-triphénylméthane-bis-maléimide
— le N,N'-3,5-triazole-1,2,4-bis-maléimide
— le N,N' dodécaméthylène-bis-maléimide
— le N,N'-triméthyl-2,2,4-hexaméthylène-bis-maléimide
— le N,N'-4,4'-diphénylméthane-bis-citraconimide
— le bis (maléimido-2 éthoxy)-1,2 éthane
— le bis (maléimido-3 propoxy)-1,3 propane
— le N,N'-4,4'-benzophénone-bis-maléimide
— le N,N'-pyridinediyle-2,6-bis-maléimide
— le N,N'-naphtylène-1,5-bis-maléimide
— le N,N' cyclohexylène-1,4-bis-maléimide
— le N,N'-méthyl-5-phénylène-1,3-bis-maléimide
— le N,N'-méthoxy-5-phénylène-1,3-bis-maléimide.

Ces bis-imides peuvent être préparés par application des méthodes décrites dans le brevet américain n° 3 018 290 et le brevet anglais n° 1 137 592.

Comme exemples spécifiques des monomaléimides utilisables on peut indiquer le N-phénylmaléimide, le N-phényl-méthyl-maléimide, le N-phényl-chloromaléimide, le N-p-chlorophényl-maléimide, le N-p-méthoxyphényl-maléimide, le N-p-méthylphénylmaléimide, le N-p-nitrophénylmaléimide, le N-p-phénoxyphénylmaléimide, le N-p-phénylaminophénylmaléimide, le N-p-phénoxycarbonylphénylmaléimide, le maléimido-1 acétoxysuccinimido-4 benzène, le maléimido-4 acétoxysuccinimido-4′ diphénylméthane, le maléimido-4 acétoxysuccinimido-4′ diphényléther, le maléimido-4 acétamido-4′ diphényléther, la maléimido-2 acétamido-6 pyridine, le maléimido-4 acétamido-4′ diphénylméthane, le N-p-phénylcarbonylphénylmaléimide.

Ces mono-imides peuvent être préparés par application de la méthode décrite dans le brevet américain 2 444 536 pour la préparation de N-aryl-maléimide.

Comme exemples de maléimide (II), on peut également citer les oligomères à groupements imides de formule générale :

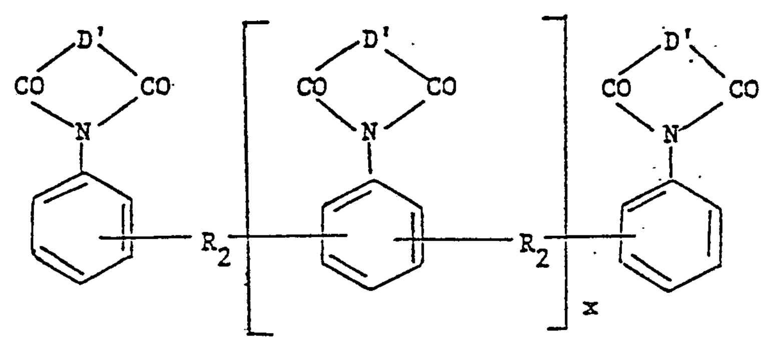

dans laquelle x représente un nombre allant de 0,1 à 2 environ, le symbole $R_2$ représente un radical hydrocarboné divalent, ayant de 1 à 8 atomes de carbone, qui dérive d'un aldéhyde ou d'une cétone de formule générale :

$$O = R_2$$

dans laquelle l'atome d'oxygène est lié à un atome de carbone du radical $R_2$, le symbole D′ représente un radical organique divalent possédant de 2 à 24 atomes de carbone, dont les valences sont portées par des atomes de carbone adjacents et qui dérive d'un anhydride interne de formule générale :

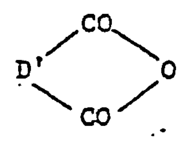

une proportion d'au moins 60 % environ des radicaux D′ représentant un radical de formule :

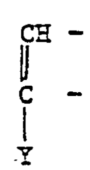

dans laquelle le symbole Y possède la signification donnée précédemment, les radicaux D′ éventuellement restants pouvant notamment représenter un radical alcoylène, cycloalcoylène, aromatique carbo- ou hétérocyclique. La préparation de ces oligomères à groupements imides est décrite dans la demande de brevet allemand n° 230 874.

S'agissant du composé aromatique (b), on fait appel à un composé portant un ou plusieurs atomes d'hydrogène nucléaires qui sont rendus labiles par la présence, sur le noyau aromatique qui les porte, d'au moins deux substituants attracteurs d'électrons dont l'un est toujours un groupe hydroxyle, et l'autre (quand il y en a deux) ou les autres (quand il y a en plus de deux) sont choisis dans le groupe formé par : —OH, $—NO_2$, $—ONO_2$, —CN, —NO, —COOH, —COOR′, —OR′, (où R′ est un radical alkyle ayant de 1 à 4 atomes de carbone), —Cl, —Br, —I, —F.

Plus précisément, le composé aromatique (b) peut être un composé mononucléaire de formule :

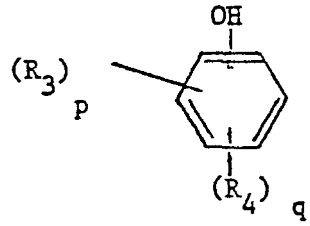

(III)

dans laquelle :

— les symboles $R_3$, qui peuvent être identiques ou différents, représentent des substituants attracteurs d'électrons choisis dans le groupe formé par : —OH, —$NO_2$, —Cl, —Br et —I ;

— le symbole $R_4$ représente un groupe méthyle ;

— p est un nombre entier égal à 1 ou 2 ;

— q est un nombre entier égal à 0 ou 1 ;

— la somme (p + q) est au plus égale à 2.

Le composé aromatique (b) peut également être un composé de formule :

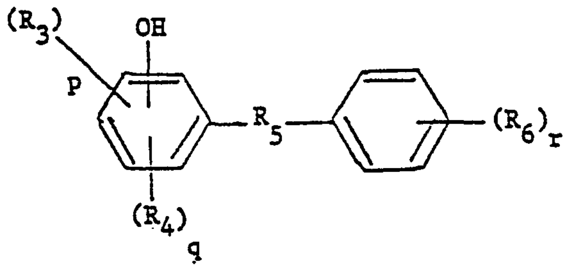

(IV)

dans laquelle :

— $R_3$, $R_4$, p et q ont les significations données ci-avant ;

— $R_5$ représente un groupe tel que :

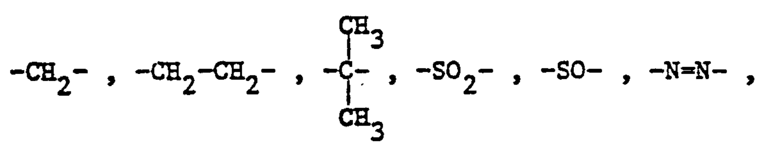

un atome de soufre ou d'oxygène ; un lien valentiel simple ;

— les symboles $R_6$, qui peuvent être identiques ou différents, représentent des groupes méthyle et/ou des substituants attracteurs d'électrons choisis dans le groupe formé par : —OH, —$NO_2$, —Cl, —Br, —I ;

— r est un nombre entier allant de 0 à 3.

Le composé aromatique (b) peut encore être un composé polynucléaire de formule :

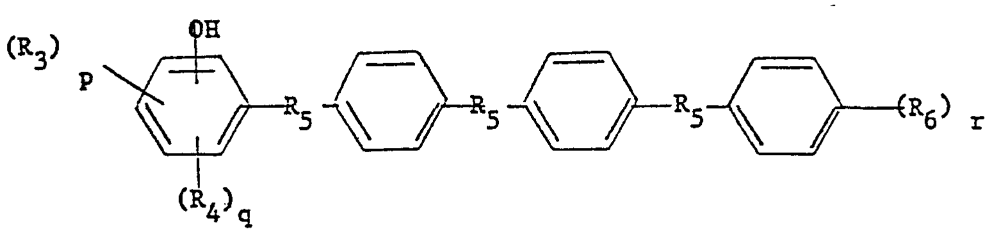

(V)

dans laquelle :

— les symboles $R_3$, $R_4$, $R_5$ (qui peuvent être identiques ou différents), $R_6$, p, q et r ont les significations données ci-avant.

A titre de composés aromatiques de formule (III) à (V), on peut citer notamment :

Le trihydroxy-1,2,3 benzène, le trihydroxy-1,2,4 benzène, le trihydroxy-1,3,5 benzène, le dihydroxy-1,2 benzène, le dihydroxy-1,2 chloro-4 benzène, le dihydroxy-1,2 bromo-4 benzène, le dihydroxy-1,2 méthyl-3 benzène, le dihydroxy-1,3 benzène, le dihydroxy-1,3 chloro-5 benzène, le dihydroxy-1,3 bromo-6 benzène, le dihydroxy-1,3 méthyl-2 benzène, le dihydroxy-1,4 benzène, le dihydroxy-1,4 chloro-2 benzène, le dihydroxy-1,4 nitro-2 benzène, le dichloro-2,4 phénol, le dichloro-3,5 phénol, le dinitro-3,5 phénol, le chloro-2 nitro-5 phénol, le chloro-2 phénol, le chloro-4 phénol, le chloro-3 phénol, le bromo-4 phénol, l'iodo-4 phénol, le nitro-4 phénol, le dihydroxy-2,2′ dichloro-5,5′ diphénylméthane, le dihydroxy-2,5 diphénylméthane, le tétrahydroxy-2,4,2′,4′ diphényle, le tétrahydroxy-2,5,2′,5′ diphényle, le dihydroxy-2,2′ dinitro-3,3′ diphényle, le dihydroxy-2,2′ dinitro-5,5′ diphényle, le dihydroxy-2,4 dinitro-2′,4′ azobenzène, le dihydroxy-2,4 azobenzène, le dihydroxy-2,4 nitro-4′ azobenzène, l'hydroxy-2 nitro-5 azobenzène, le nitro-3 hydroxy-4 azobenzène, l'hydroxy-3 dinitro-4,6 diphényléther, la dihydroxy-2,5 diphénylsulfone, la dihydroxy-2,3 diphénylsulfone, le tétrahydroxy-2,5,2′,5′ diphénylsulfure, le bis(dihydroxy-2′,4′ azobenzène) méthane.

Comme composés aromatiques (b), on peut encore utiliser un composé comportant dans sa structure deux ou plus de deux noyaux aromatiques orthocondensés ou bien ortho- et péri-condensés, et dans lequel au moins un noyau aromatique porte au moins de deux substituants attracteurs d'électrons dont l'un est un groupe hydroxyle, tandis que l'autre ou les autres substituants sont choisis dans le groupe formé par : —OH, —$NO_2$, —Cl, —Br, —I.

A titre d'exemples, on peut citer : le dihydroxy-1,2 naphtalène, le dihydroxy-1,4 naphtalène, le dihydroxy-2,3 naphtalène, le nitro-1 hydroxy-2 naphtalène, le dinitro-1,6 hydroxy-2 naphtalène, le chloro-1 hydroxy-3 naphtalène, le bromo-1 hydroxy-2 naphtalène, le dihydroxy-1,2 anthracène, le trihydroxy-1,2,9 anthracène, le trihydroxy-1,4,9 anthracène le trihydroxy-1,2,10 anthracène.

Conviennent enfin les dérivés de l'anthraquinone-9,10 dans lesquels au moins un noyau aromatique est substitué par au moins deux groupes attracteurs d'électrons, l'un étant un groupe hydroxyle, l'autre ou les autres étant choisis dans le groupe formé par : —OH, —$NO_2$, —Cl, —Br, —I.

On citera par exemple : la dihydroxy-1,2 anthraquinone-9,10, la dihydroxy-1,4 anthraquinone-9,10, la dihydroxy-1,3 anthraquinone-9,10, la dihydroxy-2,3 anthraquinone-9,10.

Les composés aromatiques (b) qui conviennent tout particulièrement bien dans le cadre de la présente invention sont choisis dans le groupe constitué par : le dihydroxy-1,4 benzène, le dihydroxy-1,3 benzène, le dihydroxy-1,2 benzène, le trihydroxy-1,2,3 benzène, le dihydroxy-2,4 azobenzène, la dihydroxy-1,4 anthraquinone-9,10 le bis(dihydroxy-2′,4′ azobenzène) méthane, le nitro-4 phénol, le chloro-4 phénol, le bromo-4 phénol.

S'agissant de la polyamine (c) de formule générale $G(NH_2)_z$, on utilise en particulier une diamine biprimaire de formule générale : $H_2N$—Q—$NH_2$ (VI) dans laquelle le symbole Q peut représenter l'un des radicaux divalents que représente le symbole A.

A titre d'illustration des polyamines (c) peuvent convenir dans le cadre de l'invention, notamment : le diamino-4,4′ dicyclohexylméthane, le diamino-1,4 cyclohexane, la diamino-2,6 pyridine, la métaphénylène diamine, la paraphénylène diamine, le diamino-4,4′ diphénylméthane, le bis(amino-4 phényl) 2,2 propane, la benzidine, l'oxyde de diamino-4,4′ phényle, le sulfure de diamino-4,4′ phényle, la diamino-4,4′ diphénylsulfone, l'oxyde de bis(amino-4 phényl) méthyl phosphine, l'oxyde de bis(amino-4 phényl) phényl phosphine, la N,N′ (amino-4 phényl) méthylamine, le diamino-1,5 naphtalène, la métaxylylène diamine, la paraxylylène diamine, le bis(paraaminophényl) 1,1 phtalane, l'hexaméthylène diamine, le diamino-6,6′ bipyridyle-2,2′, la diamino-4,4′ benzophénone, le diamino-4,4′ azobenzène, le bis(amino-4 phényl) phénylméthane, le bis(amino-4 phényl)-1,1 cyclohexane, le bis(amino-4 méthyl-3 phényl)-1,1 cyclohexane, le bis(m-aminophényl)-2,5 oxadiazole-1,3,4, le bis(p-aminophényl)-2,5 oxadiazole-1,3,4, le bis(m-aminophényl)-2,5 thiazolo (4,5-d) thiazole, le di(m-amino-phényl)-5,5′ bis(oxadiazolyle-1,3,4)-2,2′, le bis(p-aminophényl) 4,4′ bithiazole-2,2,′, le m-bis[(p-aminophényl-4) thiazolyl-2] benzène, le bis(m-aminophényl)-2,2′ bibenzimidazole-5,5′, le diamino-4,4′ benzanilide, le diamino-4,4′ benzoate de phényle, la N,N′-bis(amino-4 benzoyl) p-phénylène diamine, le bis(m-aminophényl)-3,5 phényl-4 triazole-1,2,4, le N,N′-bis(p-aminobenzoyl) diamino-4,4′ diphénylméthane, le bis p-(amino-4 phénoxycarbonyl) benzène, le bis p-(amino-4 phénoxy) benzène, le diamino-3,5 triazole-1,2,4, le bis(amino-4 phényl)-1,1 phényl-1 éthane, la bis(amino-4 phényl)-3,5 pyridine, le triamino-1,2,4 benzène, le triamino-1,3,5 benzène, le triamino-2,4,6 toluène, le triamino-2,4,6 triméthyl-1,3,5 benzène, le triamino-1,3,7 naphtalène, le triamino-2,4,4′ diphényle, la triamino-2,4,6 pyridine, le triamino-2,4,4′ oxyde de phényle, le triamino-2,4,4′ diphénylméthane, la triamino-2,4,4′ diphénylsulfone, la triamino-2,4,4′ benzophénone, le triamino-2,4,4′ méthyl-3 diphénylméthane, la N,N,N-tri(amino-4 phényl) amine, le tri(amino-4 phényl) méthane, le tri(amino-4,4′, 4″ orthophosphate de phényle, l'oxyde de tri(amino-4 phényl) phosphine, le triamino-3,5,4′ benzanilide, la mélamine, la tétraamino-3,5,3′,5′ benzophénone, le tétraamino-1,2,4,5 benzène, le tétraamino-2,3,6,7 naphtalène, la diamino-3,3′ benzidine, le tétraamino-3,3′,4,4′ oxyde de phényle, le tétraamino-3,3′,4,4′ diphénylméthane, la tétraamino-3,3′,4,4′ diphénylsulfone, la bis(diamino-3,4′ phényl)-3,5 pyridine, les oligomères de formule moyenne :

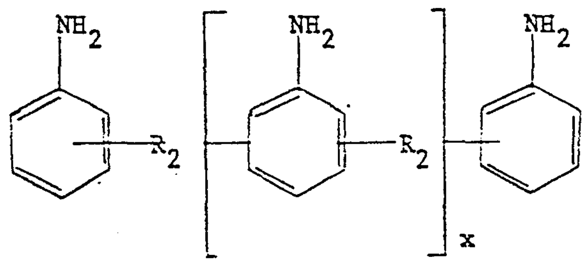

dans laquelle $R_2$ et x possèdent la signification donnée précédemment. Ces oligomères à groupements amine peuvent être obtenus selon des procédés connus tels que ceux qui sont décrits dans les brevets français 1 430 977, 1 481 935 et 1 533 696.

Pour la préparation des polymères selon l'invention, il doit être entendu que l'on peut utiliser un mélange d'oligoimide (a) ainsi qu'un mélange de composés aromatiques (b). De même, il va de soi que par le terme polyamine, on peut également désigner des mélanges de polyamines de même fonctionnalité ou bien encore des mélanges de polyamines dont au moins deux possèdent des fonctionnalités différentes. On utilise généralement une ou plusieurs diamines biprimaires éventuellement en association avec une ou plusieurs polyamines de fonctionnalité supérieure et pouvant représenter, en poids, jusqu'à 50 % du poids des diamines engagées.

Lorsque les polymères selon l'invention sont préparés à partir d'un oligoimide (a) et d'un composé aromatique à atomes d'hydrogène nucléaires labiles (b) (variante 1), on choisit les quantités de réactifs de manière que le rapport entre le nombre de molécules de composé aromatique et le nombre de doubles liaisons carbone-carbone de l'oligoimide soit compris entre 0,01 et 1,1 ; la quantité préférée correspond à un rapport compris entre 0,05 et 1,1.

Lorsque les polymères selon l'invention sont préparés à partir d'oligoimide (a), de composé aromatique à atomes d'hydrogène nucléaires labiles (b) et de polyamine (c) (variante 2), on utilise des quantités de réactifs telles que le rapport entre le nombre total de molécules du composé à hydrogènes labiles (b) et de la polyamine (c) d'une part, et le nombre de doubles liaisons de l'oligoimide (a) d'autre part, soit compris entre 0,01 et 1,1 ; le rapport préféré se situe entre 0,05 et 1,1. Dans le cas de la variante 2 le rapport molaire entre le composé aromatique à hydrogènes labiles (b) d'une part et la polyamine (c) d'autre part est compris entre 0,02 et 50 et de préférence entre 0,05 et 20.

La température de réaction peut varier dans d'assez larges limites, en fonction de la nature et du nombre de réactifs en présence, mais en règle générale elle se situe entre 50 °C et 300 °C.

Les polymères selon l'invention peuvent être préparés en masse en chauffant au moins jusqu'à l'obtention d'un liquide homogène, le mélange constitué dans la variante d'oligoimide (a) et de composé aromatique (b), et dans la variante 2 d'oligoimide (a) de composé aromatique (b) et de polyamine (c). Dans ce qui suit ce mélange sera désigné par l'expression « mélange des réactifs ». Avant de soumettre le mélange des réactifs au chauffage il est avantageux d'en effectuer une homogénéisation préalable.

La préparation des polymères selon l'invention peut aussi être effectuée par chauffage du mélange des réactifs au sein d'un diluant organique qui est liquide dans une partie au moins de l'intervalle 50-300 °C. Parmi ces diluants, on peut mentionner en particulier des hydrocarbures aromatiques comme les xylènes et le toluène, des hydrocarbures halogénés comme les chlorobenzènes, des éthers comme le dioxanne, le tétrahydrofuranne, et l'oxyde de dibutyle, le diméthylformamide, le diméthylsulfoxyde et la N-méthylpyrrolidone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement 120 °C.

Mais ces polymères peuvent également se présenter sous l'aspect de prépolymères (P) présentant un point de ramollissement à une température inférieure à 250 °C. Ces prépolymères peuvent être obtenus en masse en chauffant le mélange des réactifs jusqu'à l'obtention d'un produit homogène ou pâteux à une température généralement située entre 50 et 200 °C. La préparation des prépolymères peut également être effectuée en suspension ou en solution dans un diluant qui est liquide dans une partie au moins de l'intervalle 50-200 °C.

Il doit être noté que, selon un mode de réalisation préféré de l'invention on peut, dans le cas de la variante 2, à partir de l'oligoimide (a) et du composé aromatique (b) former un prépolymère (PP) qui est ensuite associé à la polyamine (c). On peut aussi préparer au préalable un prépolymère (PP) en chauffant le mélange d'oligoimide (a) et de polyamine (c), puis le combiner avec le composé aromatique (b) pour obtenir le prépolymère (P).

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de

moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante, ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 350 °C, généralement comprises entre 150 et 300 °C ; une mise en forme complémentaire peut être effectuée pendant le durcissement, éventuellement sous vide ou pression super-atmosphérique, ces opérations pouvant également être consécutives. Le durcissement peut être effectué en présence d'un initiateur de polymérisation radicalaire tel que le peroxyde de lauroyle, l'azobisisobutyronitrile, ou d'un catalyseur de polymérisation anionique tel que le diazabicyclooctane.

Les polymères selon l'invention, intéressent les domaines de l'industrie qui requièrent des matériaux doués de bonnes propriétés mécaniques et électriques ainsi que d'une grande inertie chimique à des températures de 200 °C à 300 °C. A titre d'exemples, ils conviennent pour la fabrication d'isolants en plaques ou tubulaires pour transformateurs électriques, de circuits imprimés, de pignons, bagues et butées autolubrifiantes.

Les exemples ci-après illustrent l'invention.

## Exemple 1

Dans un broyeur à couteaux on mélange intimement 10,75 g de N,N'-4,4' diphénylméthane bis-maléimide (0,03 mole) et 5,35 g de dihydroxy-2,4 azobenzène (0,025 mole). Le mélange homogène ainsi obtenu est placé dans une capsule en aluminium et l'ensemble est mis dans une étuve chauffée à 140 °C.

On effectue des prélèvements d'échantillons pour différentes durées de séjour à 140 °C et on dose par des méthodes classiques les doubles liaisons du bis-maléimide restant et les fonctions diazo du dihydroxy-2,4 azobenzène restant.

On détermine également le point de ramollissement des divers échantillons prélevés.

| Durée de séjour à 140 °C | 0 | 15 mn | 30 mn | 1 h | 2 h |
|---|---|---|---|---|---|
| Equivalents grammes des doubles liaisons du bis-maléimide restant | 0,0595 | 0,0525 | 0,0500 | 0,0439 | 0,0400 |
| Moles de dérivé azo restant | 0,0237 | 0,0206 | 0,0156 | 0,0127 | 0,0073 |
| Point de ramollissement (en °C) | 131 | 60 | 70 | 83 | 95 |

On observe qu'il disparaît globalement et de manière approximative environ 1 double liaison du bis-maléimide pour une molécule de dihydroxy-2,4 azobenzène.

## Exemple 2

Dans un broyeur à couteaux on mélange intimement 22,4 g de N,N'-4,4' diphénylméthane bis-maléimide (0,0625 mole) et 11,82 g de bis(dihydroxy-2',4' azobenzène) méthane (0,027 mole). Le mélange est placé dans une capsule en aluminium et l'ensemble est mis dans une étuve à 180 °C durant 50 minutes. Le produit obtenu est finement broyé ; il présente un point de ramollissement de 165 °C.

On place 25 g de ce produit broyé dans un moule cylindrique de 75 mm de diamètre et de 25 mm de profondeur. L'ensemble est placé entre les plateaux d'une presse préchauffée à 250 °C ; une pression de 200 bars est appliquée pendant une heure. L'objet obtenu est démoulé, puis est recuit pendant 68 heures à 250 °C. On obtient une pastille lisse, noire, homogène et de bel aspect dont les propriétés mécaniques mesurées d'après la norme ASTM/D 79063 sont les suivantes :

| PROPRIETES | INITIALES | | Après 500 h à 250 °C | |
|---|---|---|---|---|
| | Mesurées à 25 °C | Mesurées à 250 °C | Mesurées à 25 °C | Mesurées à 250 °C |
| Résistance en flexion (kg/mm²) | 10,7 | 4,7 | 10,8 | 2,7 |
| Module en flexion (kg/mm²) | 285 | 135 | 280 | 145 |

Exemple 3

Un mélange intime réalisé à partir de 31,5 g de N,N'-4,4' diphénylméthane-bis-maléimide (0,088 mole) et de 7,6 g de dihydroxy-1,3 benzène (0,069 mole), est placé dans une capsule en aluminium et est mis dans une étuve à 280 °C pendant 2 h 15 mn.

Le produit récupéré après ce traitement est broyé ; il présente un point de ramollissement de 161 °C.

Les résultats de l'étude de ce produit par voie spectroscopique (infra-rouge et résonance magnétique nucléaire) permettent de lui conférer la structure suivante :

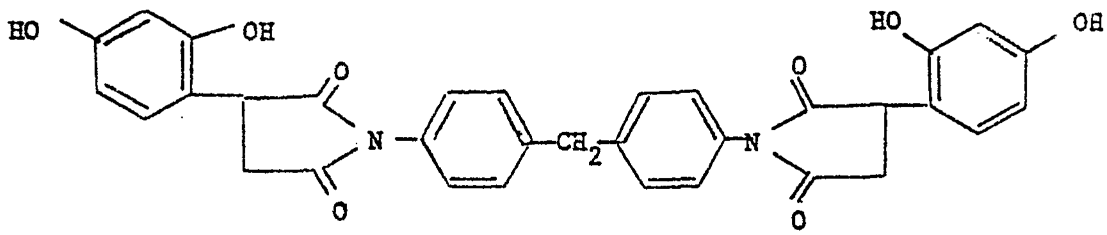

La poudre obtenue est mise en forme par moulage à compression comme décrit dans l'exemple 2.

On recuit 48 h à 250 °C. L'objet obtenu présente une résistance en flexion de 10,6 kg/mm$^2$ à 25 °C et 6,1 kg/mm$^2$ à 250 °C (Norme ASTM/D 79 063).

Exemple 4

Dans un réacteur muni d'une agitation, d'un thermomètre et d'un réfrigérant à boules, on introduit 26 g de N,N'-4,4' diphénylméthane-bis-maléimide (0,07 mole) et 16 g de dihydroxy-1,4 benzène (0,14 mole) et 25 cm$^3$ d'orthodichlorobenzène. On agite et on porte l'ensemble à 180 °C et on maintient à reflux le solvant pendant 5 heures. Ensuite on précipite la solution dans de l'éther éthylique ; on récupère ainsi un produit solide jaune qui est filtré, lavé et séché.

Le point de ramollissement de cette poudre est de 84 °C ; il est porté à 150 °C par un traitement consistant à maintenir la poudre pendant 10 h à 180 °C.

Après broyage la poudre est mise en œuvre par moulage-compression comme décrit dans l'exemple 2.

L'objet obtenu présente une résistance en flexion mesurée à 25 °C, de 9,5 kg/mm$^2$, après avoir été recuit 48 heures à 250 °C.

Exemples 5 à 7

La réaction décrite à l'exemple 4 est réalisée en remplaçant le dihydroxy-1,4 benzène par des quantités variables de dihydroxy-1,3 benzène. Le tableau ci-dessous indique les poids respectifs de N,N'-4,4' diphénylméthane bis-maléimide et de dihydroxy-1,3 benzène mis en jeu dans chaque essai.

La poudre obtenue dans chaque essai est amenée à un point de ramollissement de 160 °C par un séjour de 1 heure en étuve à 180 °C.

Après une mise en forme par moulage-compression, comme décrit à l'exemple 2, et un recuit de 48 heures à 250 °C, on mesure la résistance en flexion à 25 °C et à 250 °C des bojets moulés (norme ASTM/D 79 063).

| EXEMPLES | Poids de bis-maléimide engagé (en g) | Poids de dihydroxy-1,3-benzène engagé (en g) | Résistance en flexion initiale (kg/mm$^2$) | |
|---|---|---|---|---|
| | | | à 25 °C | à 250 °C |
| 5 | 73,3 (0,2 mole) | 27,2 (0,25 mole) | 12,0 | 6,7 |
| 6 | 79,0 (0,22 mole) | 19,0 (0,17 mole) | 10,1 | 5,2 |
| 7 | 90,3 (0,25 mole) | 12,7 (0,11 mole) | 8,7 | 3,7 |

Exemple 8

L'opération décrite dans l'exemple 4 est répétée en utilisant 4,48 g de N,N'-4,4' diphénylméthane-bis-maléimide (0,012 mole), 6,0 g de dihydroxy-1,4 anthraquinone 9-10 (0,025 mole) et 25 $cm^3$ d'orthodichlorobenzène.

Le produit isolé, ayant un point de ramollissement de 149 °C, est mis en œuvre par moulage-compression comme décrit dans l'exemple 2.

On obtient un objet moulé homogène et résistant.

Exemple 9

Dans un réacteur cylindrique équipé d'une agitation, d'un thermomètre et d'un réfrigérant on introduit 70,0 g de N,N'-4,4' diphénylméthane-bis-maléimide (0,19 mole) et 15,6 g de dihydroxy-1,4 anthraquinone 9-10 (0,081 mole). On plonge l'ensemble, sous agitation, dans un bain thermorégulé à 200 °C. Après un séjour de 10 mn, on obtient un liquide rouge très fluide, que l'on dégaze sous légère dépression et que l'on coule dans un moule parallélépipédique préchauffé à 200 °C.

L'ensemble est maintenu pendant 24 heures à 200 °C, puis l'objet obtenu est démoulé : il est brun-rouge et homogène.

Exemple 10

A 25 g du produit de réaction obtenu dans l'exemple 4, on ajoute 1 g de 4,4'-diaminodiphénylméthane.

Le mélange est homogénéisé par broyage et mis en forme par moulage-compression comme décrit à l'exemple 2.

On obtient un objet homogène de bel aspect.

Exemple 11

Dans un réacteur cylindrique, tel que celui utilisé dans l'exemple 10, on introduit 51,25 g de N,N'-4,4' diphénylméthane-bis-maléimide (0,14 mole) et 19,28 g de chloro-4 phénol (0,15 mole). Le mélange est porté sous agitation à une température de 110 °C pendant 30 mn, temps durant lequel s'effectue l'homogénéisation.

On obtient une solution limpide, très fluide que l'on dégaze en créant 1 légère dépression (pression résiduelle 100 mm de Hg) ; on la coule ensuite dans un moule parallélépipédique préchauffé à 150 °C.

L'ensemble est placé 12 heures à 150 °C. On obtient un objet rigide réticulé que l'on recuit pendant 24 heures à 200 °C.

Exemple 12

L'exemple 11 est reproduit en remplaçant le chloro-4 phénol par 20,28 g de nitro-4 phénol (0,014 mole).

Après mise en forme on obtient une plaque homogène, rigide et résistante.

**Revendications**

1. Polymères à groupements imides, caractérisés en ce qu'ils sont préparés par réaction de :

a) un oligoimide de formule générale :

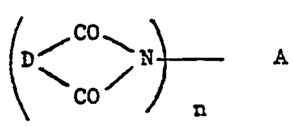

(I)

dans laquelle D représente un radical divalent de formule :

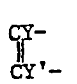

,

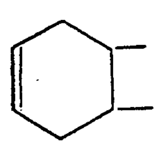

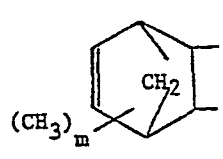

où Y et Y', identiques ou différents, représentent H, $CH_3$, ou Cl et m est égal à 0 ou 1 ; le symbole A représente un radical organique de valence n renfermant jusqu'à 50 atomes de carbone ; et n représente un nombre au moins égal à 1,5 et au plus égal à 5 ;

b) un composé aromatique comportant un ou plusieurs atomes d'hydrogène nucléaire rendus labiles par la présence, sur le noyau aromatique qui les porte, d'au moins deux substituants attracteurs d'électrons dont l'un est un groupe hydroxyle, tandis que l'autre ou les autres substituants attracteurs d'électrons sont choisis dans le groupe formé par : —OH ; —$NO_2$ ; —$ONO_2$ ; —CN ; —NO ; —COOH ; —COOR' ; —OR' (où R' est un radical alcoyle ayant de 1 à 4 atomes de carbone) ; —Cl ; —Br ; —I ; —F ;

2. Polymères à groupements imides, caractérisés en ce qu'ils sont préparés par réaction de :

a) un oligoimide de formule générale :

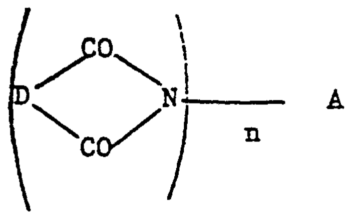

(I)

dans laquelle A et n possèdent les significations données dans la revendication 1 :

b) un composé aromatique comportant un ou plusieurs atomes d'hydrogène nucléaire rendus labiles par la présence, sur le noyau aromatique qui les porte, d'au moins deux substituants attracteurs d'électrons dont l'un est un groupe hydroxyle, tandis que l'autre ou les autres substituants attracteurs d'électrons sont choisis dans le groupe formé par : —OH ; —$NO_2$ ; —$ONO_2$ ; —CN ; —NO ; —COOH ; —COOR' ; —OR' (où R' est un radical alcoyle ayant de 1 à 4 atomes de carbone) ; —Cl ; —Br ; —I ; —F ;

c) une polyamine de formule : $G(NH_2)_z$

dans laquelle G est un radical organique de valence z et z est un nombre au moins égal à 2.

3. Polymères selon l'une quelconque des revendications 1 et 2, caractérisés en ce que l'oligoimide (a) est un maléimide de formule :

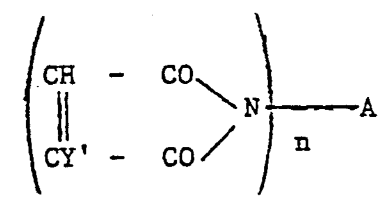

(II)

dans laquelle Y', A et n ont les significations données dans la revendication 1.

4. Polymères selon l'une quelconque des revendications 1 et 2, caractérisés en ce que le composé aromatique (b) est un composé de formule :

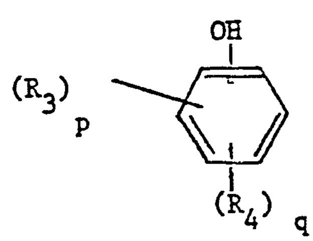

(III)

dans laquelle :

— les symboles $R_3$, qui peuvent être identiques ou différents, représentent des substituants attracteurs d'électrons choisis dans le groupe formé par : —OH, —$NO_2$, —Cl, —Br, —I ;

— le symbole $R_4$ représente un groupe méthyle ; p est un nombre entier égal à 1 ou 2 ; q est un nombre entier égal à 0 ou 1 ; et la somme (p + q) est au plus égale à 2.

5. Polymères selon l'une quelconque des revendications 1 et 2, caractérisés en ce que le composé aromatique (b) est un composé de formule :

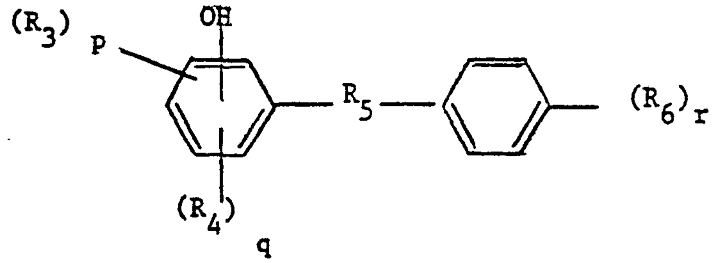

(IV)

dans laquelle :

— $R_3$, $R_4$, p et q ont les significations données dans la revendication 4 ;

— $R_5$ représente un groupe tel que

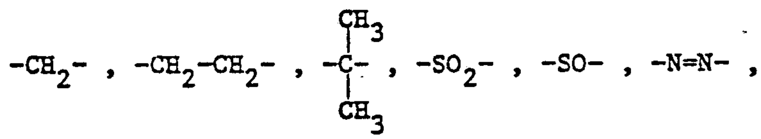

un atome de soufre ou d'oxygène, ou un lien valentiel simple ;

— les substituants $R_6$, identiques ou différents, représentent des groupes méthyle et/ou des groupes attracteurs d'électrons choisis dans le groupe formé par : —OH, —$NO_2$, —Cl, —Br, —I,

— r est un nombre entier allant de 0 à 3.

6. Polymères selon l'une quelconque des revendications 1 et 2, caractérisés en ce que le composé aromatique (b) est un composé de formule :

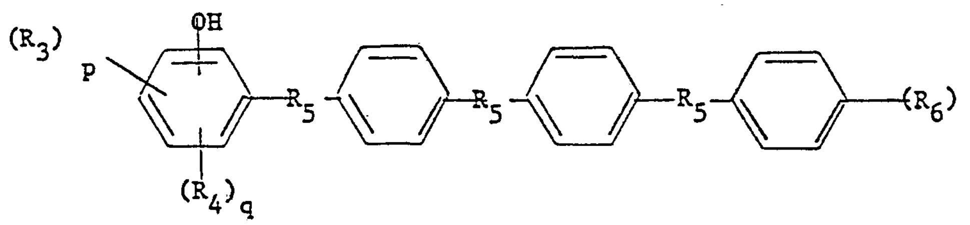

(V)

dans laquelle les symboles $R_3$, $R_4$, $R_5$ (identiques ou différents), $R_6$, p, q, r ont les significations données dans la revendication 5.

7. Polymères selon l'une quelconque des revendications 1 et 2, caractérisés en ce que le composé aromatique (b) est un composé comportant dans sa structure deux ou plus de deux noyaux aromatiques ortho-condensés, ou bien ortho- et péri-condensés et dans lequel au moins un noyau aromatique porte au moins deux substituants attracteurs d'électrons dont l'un est un groupe hydroxyle, tandis que l'autre ou les autres substituants attracteurs d'électrons sont choisis dans le groupe formé par : —OH, —$NO_2$, —Cl, —Br, —I.

8. Polymères selon l'une quelconque des revendications 1 et 2, caractérisés en ce que le composé aromatique (b) est un dérivé de l'anthraquinone-9,10 dans lequel au moins un noyau aromatique est substitué par au moins deux groupes attracteurs d'électrons, l'un étant un groupe hydroxyle, l'autre ou les autres étant choisis dans le groupe formé par : —OH, —$NO_2$, —Cl, —Br, —I.

9. Polymères selon l'une quelconque des revendications 1 et 2, caractérisés en ce que le composé aromatique (b) est pris dans le groupe formé par : le dihydroxy-1,4 benzène, le dihydroxy-1,3 benzène, le dihydroxy-1,2 benzène, le trihydroxy-1,2,3 benzène, le dihydroxy-2,4 azobenzène, la dihydroxy-1,4 anthraquinone-9,10, le bis(dihydroxy-2',4' azobenzène) méthane, le nitro-4 phénol, le chloro-4 phénol, le bromo-4 phénol.

10. Polymères selon la revendication 2, caractérisés en ce que la polyamine (c) est une diamine biprimaire de formule :

$$H_2N—O—NH_2 \qquad (VI)$$

dans laquelle le symbole Q représente l'un des radicaux que représente le symbole A.

11. Procédé de préparation de polymères selon la revendication 1 ou l'une des revendications 3 à 9, caractérisé en ce que l'on chauffe le mélange d'oligoimide (a) et de composé aromatique à atomes d'hydrogène nucléaires labiles (b) à une température comprise entre 50 et 300 °C.

12. Procédé de préparation selon la revendication 11, caractérisé en ce que les quantités de réactifs sont choisis de manière que le rapport entre le nombre de molécules de composé aromatique (b) et le nombre de doubles liaisons carbone-carbone de l'oligoimide (a) soit compris entre 0,01 et 1,1 et de préférence entre 0,05 et 1,1.

13. Procédé de préparation de polymères selon l'une quelconque des revendications 2 à 10, caractérisé en ce que l'on chauffe le mélange d'oligoimide (a), de composé aromatique (b) et de polyamine (c) à une température comprise entre 50 et 300 °C.

14. Procédé de préparation selon la revendication 13, caractérisé en ce que les quantités de réactifs sont choisies de manière que : d'une part :

— le rapport entre le nombre total de molécules de composé aromatique (b) + de polyamine (c) et le nombre de doubles liaisons carbone-carbone de l'oligoimide (a) soit compris entre 0,01 et 1,1 et de préférence entre 0,05 et 1,1

d'autre part :

— le rapport molaire entre le composé aromatique (b) et la polyamine (c) soit compris entre 0,02 et 50 et de préférence entre 0,05 et 20.

15. Procédé de préparation selon l'une quelconque des revendications 11 à 14, caractérisé en ce qu'il consiste à chauffer les réactifs entre 50 et 200 °C pour former dans un premier temps un prépolymère (P) puis à provoquer le durcissement du prépolymère (P) par chauffage à une température comprise entre 150 et 300 °C.

16. Procédé de préparation selon les revendications 13, 14 et 15, caractérisé en ce qu'il consiste à former, à partir de l'oligoimide (a) et du composé aromatique (b), un prépolymère (PP), puis à mélanger ce prépolymère (PP) avec la polyamine (c) pour obtenir le prépolymère (P).

17. Procédé de préparation selon les revendications 13, 14 et 15, caractérisé en ce qu'il consiste à former, à partir de l'oligoimide (a) et de la polyamine (c), un prépolymère (PP), puis à mélanger ce prépolymère (PP) avec le composé aromatique (b) pour obtenir le prépolymère (P).

18. Application des polymères selon l'une des revendications 1 à 10, à la réalisation d'objets moulés, de revêtements et d'articles à structure cellulaire.

**Claims**

1. Polymers with imide groups, characterised in that they are prepared by reacting :

a) an oligoimide of the general formula :

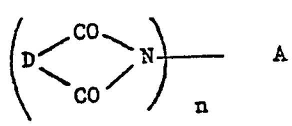 (I)

in which D represents a divalent radical of the formula :

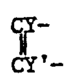 , 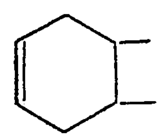 or 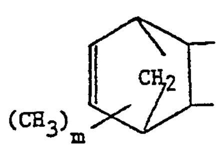

in which Y and Y', which are identical or different, represent H, $CH_3$ or Cl and m is equal to 0 or 1, the symbol A represents an organic radical of valency n, containing up to 50 carbon atoms, and n represents a number equal to at least 1.5 and at most 5 ; and

b) an aromatic compound containing one or more hydrogen atoms on the nucleus, which are rendered labile by the presence, on the aromatic nucleus which carries them, of at least two electron-attracting substituents, one of which is a hydroxyl group whilst the other electron-attracting substituent or substituents are chosen from the group comprising : —OH, —$NO_2$, —$ONO_2$, —CN, —NO, —COOH, —COOR', —OR' (in which R' is an alkyl radical having from 1 to 4 carbon atoms), —Cl, —Br, —I and —F.

2. Polymers with imide groups, characterised in that they are prepared by reacting :
a) an oligoimide of the general formula :

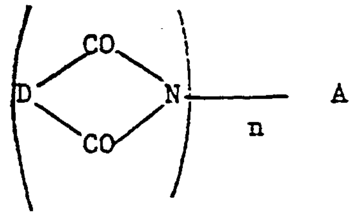

(I)

in which A and n possess the meanings given in Claim 1 ;

b) an aromatic compound containing one or more hydrogen atoms on the nucleus, which are rendered labile by the presence, on the aromatic nucleus which carries them, of at least two electron-attracting substituents, one of which is a hydroxyl group whilst the other electron-attracting substituents or substituents are chosen from the group comprising : —OH, —$NO_2$, —$ONO_2$, —CN, —NO, —COOH, —COOR', —OR' (in which R' is an alkyl radical having from 1 to 4 carbon atoms), —Cl, —Br, —I and —F ; and

c) a polyamine of the formula : $G(NH_2)_z$, in which G is an organic radical of valency z and z is a number equal to at least 2.

3. Polymers according to either one of Claims 1 and 2, characterised in that the oligoimide (a) is a maleimide of the formula :

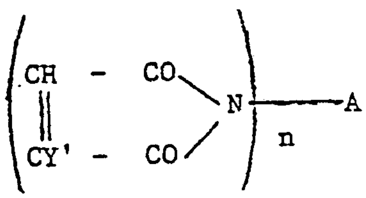

(II)

in which Y', A and n have the meanings given in Claim 1.

4. Polymers according to either one of Claims 1 and 2, characterised in that the aromatic compound (b) is a compound of the formula :

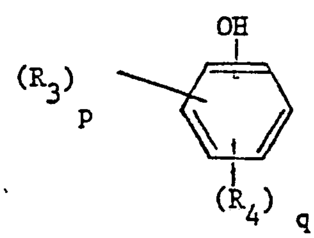

(III)

in which the symbols $R_3$, which can be identical or different, represent electron-attracting substituents chosen from the group comprising : —OH, —$NO_2$, —Cl, —Br and —I, the symbol $R_4$ represents a methyl group, p is an integer equal to 1 or 2, q is an integer equal to 0 or 1 and the sum (p + q) is equal to at most 2.

5. Polymers according to either one of Claims 1 and 2, characterised in that the aromatic compound (b) is a compound of the formula :

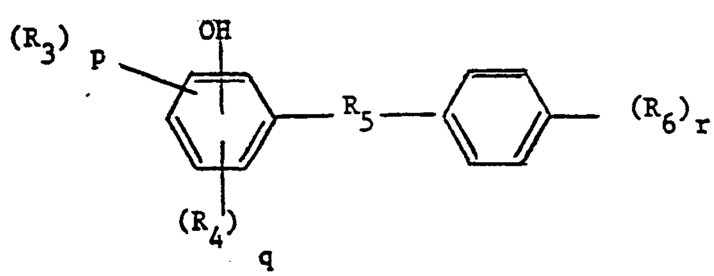

(IV)

in which $R_3$, $R_4$, p and q have the meanings given in Claim 4, $R_5$ represents a group such as

$-CH_2-$ , $-CH_2-CH_2-$ , 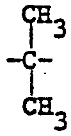 , $-SO_2-$ , $-SO-$ or $-N{=}N-$ ,

a sulphur or oxygen atom or a single valence bond, the substituents $R_6$, which are identical or different, represent methyl groups and/or electron-attracting groups chosen from the group comprising : —OH, —$NO_2$, —Cl, —Br and —I, and r is an integer ranging from 0 to 3.

6. Polymers according to either one of Claims 1 and 2, characterised in that the aromatic compound (b) is a compound of the formula :

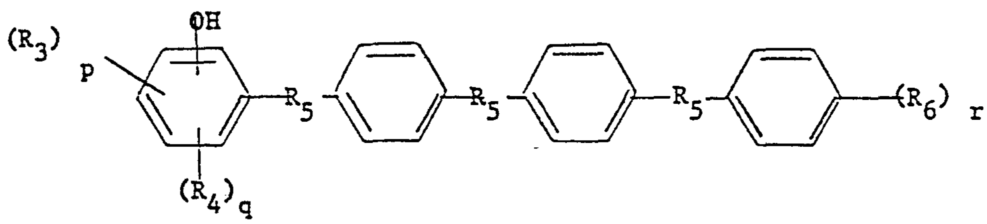 (V)

in which the symbols $R_3$, $R_4$, $R_5$ (identical or different), $R_6$, p, q and r have the meanings given in Claim 5.

7. Polymers according to either one of Claims 1 and 2, characterised in that the aromatic compound (b) is a compound which contains, in its structure, two or more than two ortho-fused (or alternatively ortho- and perifused aromatic nuclei, and in which at least one aromatic nucleus carries at least two electron-attracting substituents, one of which is a hydroxyl group whilst the other electron-attracting substituent or substituents are chosen from the group comprising : —OH, —$NO_2$, —Cl, —Br and —I.

8. Polymers according to either one of Claims 1 and 2, characterised in that the aromatic compound (b) is a 9,10-anthraquinone derivative in which at least one aromatic nucleus is substituted by at least two electron-attracting groups, one of these substituents being a hydroxyl group and the other substituent or substituents being chosen from the group comprising : —OH, —$NO_2$, —Cl, —Br and —I.

9. Polymers according to either one of Claims 1 and 2, characterised in that the aromatic compound (b) is taken from the group comprising : 1,4-dihydroxybenzene, 1,3-dihydroxybenzene, 1,2-dihydroxybenzene, 1,2,3-trihydroxybenzene, 2,4-dihydroxyazobenzene, 1,4-dihydroxy-9,10-anthraquinone, bis-(2',4'-dihydroxyazobenzene)-methane, 4-nitrophenol, 4-chlorophenol and 4-bromophenol.

10. Polymers according to Claim 2, characterised in that the polyamine (c) is a bis-primary diamine of the formula :

$$H_2N—Q—NH_2 \qquad (VI)$$

in which the symbol Q represents one ot the radicals represented by the symbol A.

11. Process for the preparation of polymers according to Claim 1 or one of Claims 3 to 9, characterised in that the mixture of the oligoimide (a) and the aromatic compound (b) with labile hydrogen atoms on the nucleus is heated at a temperature between 50 and 300 °C.

12. Process of preparation according to Claim 11, characterised in that the amounts of reactants are chosen so that the ratio of the number of molecules of the aromatic compound (b) to the number of carbon-carbon double bonds in the oligoimide (a) is between 0.01 and 1.1 and preferably between 0.05 and 1.1.

13. Process for the preparation of polymers according to any one of Claims 2 to 10, characterised in that the mixture of the oligomide (a), the aromatic compound (b) and the polyamine (c) is heated at a temperature between 50 and 300 °C.

14. Process of preparation according to Claim 13, characterised in that the amounts of reactants are chosen so that, on the one hand :

the ratio of the total number of molecules of the aromatic compound (b) + the polyamine (c) to the number of carbon-carbon double bonds in the oligoimide (a) is between 0.01 and 1.1 and preferably between 0.05 and 1.1, and,

on the other hand :

the molar ratio of the aromatic compound (b) to the polyamine (c) is between 0.02 and 50 and preferably between 0.05 and 20.

15. Process of preparation according to any one of Claims 11 to 14, characterised in that it consists in heating the reactants as between 50 and 200 °C in order to form a prepolymer (P) in a first stage, and then in curing the prepolymer (P) by heating at a temperature between 150 and 300 °C.

16. Process of preparation according to Claims 13, 14 and 15, characterised in that it consists in forming a prepolymer (PP) from the oligoimide (a) and the aromatic compound (b), and then in mixing this prepolymer (PP) with the polyamine (c) in order to obtain the prepolymer (P).

17. Process of preparation according to Claims 13, 14 and 15, characterised in that it consists in forming a prepolymer (PP) from the oligoimide (a) and the polyamine (c), and then in mixing this prepolymer (PP) with the aromatic compound (b) in order to obtain the prepolymer (P).

18. Application of the polymers according to one of Claims 1 to 10 the production of moulded articles, coatings and articles of cellular structure.

**Ansprüche**

1. Polymere mit Imidgruppierungen, dadurch gekennzeichnet, daß sie hergestellt worden sind durch Reaktion von :

a) einem Oligoimid der allgemeinen Formel :

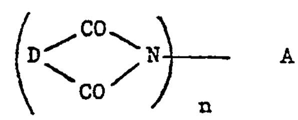

(I)

worin D einen zweiwertigen Rest der Formel :

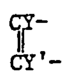 , 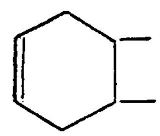 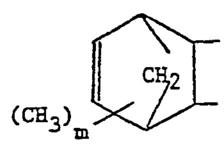

bedeutet, wobei Y und Y', welche identisch oder voneinander verschieden sind, Wasserstoff, Methyl oder Chlor bedeuten und m gleich 0 oder 1 ist ; das Symbol A einen organischen Rest mit der Valenz n und mit bis zu 50 Kohlenstoffatomen bedeutet ; und n eine Zahl mindestens gleich 1,5 und höchstens gleich 5 bedeutet ;

b) einer aromatischen Verbindung mit einem oder mehreren Kern-Wasserstoffatomen, welche durch die Anwesenheit am aromatischen Ring, der sie trägt, von mindestens zwei elektronenanziehenden Substituenten labil gemacht sind, wovon einer eine Hydroxylgruppe ist, während der andere oder die anderen elektronenanziehenden Substituenten ausgewählt sind aus der Gruppe gebildet durch : —OH ; $—NO_2$ ; $—ONO_2$ ; —CN ; —COOH ; —COOR' ; —OR' ; (worin R' ein Alkylrest mit 1 bis 4 Kohlenstoffatomen ist) ; —Cl ; —Br ; —J ; —F.

2. Polymere mit Imidgruppierungen, dadurch gekennzeichnet, daß sie hergestellt worden sind durch Reaktion von

a) einem Oligoimid der allgemeinen Formel :

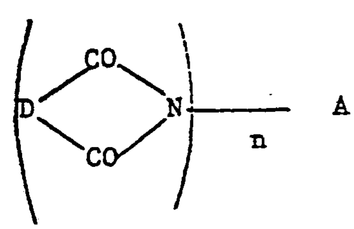

(I)

worin A und n die Anspruch 1 angegebenen Bedeutungen besitzen ;

b) einer aromatischen Verbindung mit einem oder mehreren Kern-Wasserstoffatomen,welche durch die Anwesenheit am aromatischen Ring, der sie trägt, von mindestens zwei elektronenanziehenden Substituenten labil gemacht wurden wovon einer eine Hydroxylgruppe ist, während der andere oder die anderen elektronenanziehenden Substituenten ausgewählt sind aus der Gruppe gebildet durch : —OH ; $—NO_2$ ; $—ONO_2$ ; —CN ; —NO ; —COOH ; —COOR' ; —OR' ; (worin R' ein Alkylrest mit 1 bis 4 Kohlenstoffatomen ist) ; —Cl ; —Br ; —J ; —F ;

c) einem Polyamin der Formel : $G(NH_2)_z$

worin G ein organischer Rest der Valenz z ist, und z ist eine Zahl mindestens gleich 2.

3. Polymeres gemäß einem der Ansprüche 1 und 2, dadurch gekennzeichnet, daß das Oligoimid (a)

ein Maleinimid der Formel :

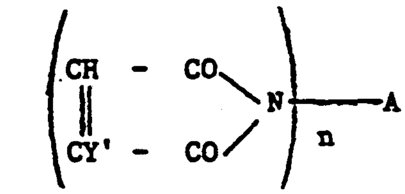

(II)

ist, worin Y', A und n die Anspruch 1 angegebenen Bedeutungen besitzen.

4. Polymeres gemäß einem der Ansprüche 1 und 2, dadurch gekennzeichnet, daß die aromatische Verbindung (b) eine Verbindung der Formel :

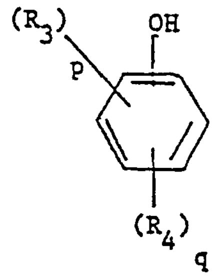

(III)

ist, worin :

Die Symbole $R_3$, welche identisch oder voneinander verschieden sein können, elektronenanziehende Substituenten bedeuten, ausgewählt aus der Gruppe gebildet durch : —OH, —$NO_2$, —Cl, —Br, —J :

das Symbol $R_4$ eine Methylgruppe bedeutet,

p eine ganze Zahl gleich 1 oder 2, ist,

q eine ganze Zahl gleich 0 oder 1 ist,

und die Summe (p+q) höchstens gleich 2 ist.

5. Polymere gemäß einem der Ansprüche 1 und 2, dadurch gekennzeichnet, daß die aromatische Verbindung (b) eine Verbindung der Formel :

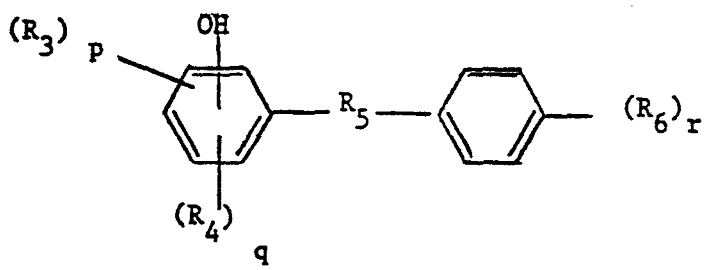

(IV)

ist, worin :

$R_3$, $R_4$, p und q die in Anspruch 4 angegebenen Bedeutungen besitzen ;

$R_5$ eine Gruppe wie

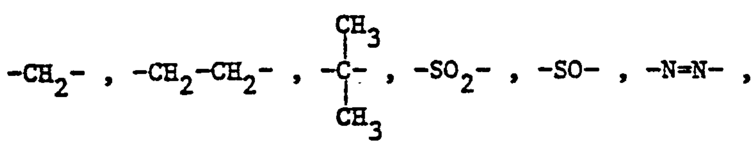

ein Sauerstoff- oder Schwefelatom oder eine einfache Valenzbindung bedeutet ;

die Substituenten $R_6$, welche identisch oder voneinander verschieden sind, Methylgruppen und/oder elektronenanziehende Gruppen bedeuten, ausgewählt aus der Gruppe gebildet durch :

—OH, —$NO^2$, —Cl, —Br, —J ;

r eine ganze Zahl von 0 bis 3 ist.

6. Polymere gemäß einem der Ansprüche 1 und 2, dadurch gekennzeichnet, daß die aromatische Verbindung (b) eine Verbindung der Formel :

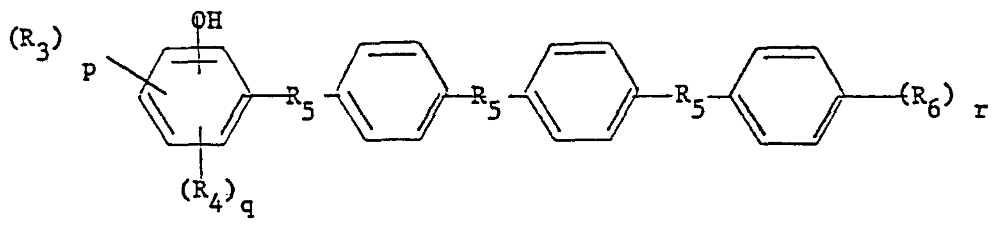

(V)

ist, worin die Symbole $R_3$, $R_4$, $R_5$ (identisch oder voneinander verschieden), $R_6$, p, q, r die in Anspruch 5 angegebenen Bedeutungen besitzen.

7. Polymere gemäß einem der Ansprüche 1 und 2, dadurch gekennzeichnet, daß die aromatische Verbindung (b) eine Verbindung ist, welche in ihrer Struktur zwei oder mehr als zwei orthokondensierte aromatische Ringe oder auch ortho- und peri-kondensierte Ringe enthält, und worin wenigstens ein aromatischer Ring wenigstens zwei elektronenanziehende Substituenten trägt, wovon einer eine Hydroxylgruppe ist, während der andere oder die anderen elektronenanziehenden Substituenten ausgewählt sind aus der Gruppe gebildet durch : —OH, —$NO_2$, —Cl, —Br, —J.

8. Polymere gemäß einem der Ansprüche 1 und 2, dadurch gekennzeichnet, daß die aromatische Verbindung (b) ein Derivat des 9,10-Anthrachinons ist, worin wenigstens ein aromatischer Ring durch wenigstens zwei elektronenanziehende Gruppen substituiert ist, wobei die eine eine Hydroxylgruppe ist und die andere oder die anderen ausgewählt sind aus der Gruppe gebildet durch : —OH, —$NO_2$, —Cl, —Br, —J.

9. Polymere gemäß einem der Ansprüche 1 und 2, dadurch gekennzeichnet, daß die aromatische Verbindung (b) ausgewählt ist aus der Gruppe gebildet durch : 1,4-Dihydroxybenzol, 1,3-Dihydroxybenzol, 1,2-Dihydroxybenzol, 1,2,3-Trihydroxybenzol, 2,4-Dihydroxy-azobenzol, 1,4-Dihydroxy-9, 10-anthrachinon, Bis-(2',4'-dihydroxy-azobenzol)-methan, 4-Nitrophenol, 4-Chlorphenol, 4-Bromphenol.

10. Polymere gemäß Anspruch 2, dadurch gekennzeichnet, daß das Polyamin (c) ein biprimäres Diamin der Formel :

$$H_2N—Q—NH_2 \quad (VI)$$

ist, worin das Symbol Q einen der Reste bedeutet, welchen das Symbol A bedeutet.

11. Verfahren zur Herstellung der Polymeren gemäß Anspruch 1 oder einem der Ansprüche 3 bis 9, dadurch gekennzeichnet, daß man das Gemisch aus Oligoimid (a) und aromatischer Verbindung mit labilen Kern-Wasserstoffatomen (b) bei einer Temperatur zwischen 50 und 300 °C erhitzt.

12. Herstellungsverfahren gemäß Anspruch 11, dadurch gekennzeichnet, daß die Mengen der Reaktionsteilnehmer derart gewählt sind, daß das Verhältnis zwischen der Anzahl der Moleküle aromatischer Verbindung (b) und der Zahl der Kohlenstoff-Kohlenstoff-Doppelbindungen des Oligoimids (a) zwischen 0,01 und 1,1 und vorzugsweise zwischen 0,05 und 1,1 liegt.

13. Verfahren zur Herstellung von Polymeren gemäß einem der Ansprüche 2 bis 10, dadurch gekennzeichnet, daß man das Gemisch aus Oligoimid (a), aromatischer Verbindung (b) und Polyamin (c) auf eine Temperatur zwischen 50 und 300 °C erhitzt.

14. Herstellungsverfahren gemäß Anspruch 13, dadurch gekennzeichnet, daß die Mengen der Reaktionsteilnehmer derart ausgewählt sind, daß :
einerseits :
das Verhältnis zwischen der Gesamtzahl der Moleküle aromatischer Verbindung (b) + Polyamin (c) und der Zahl der Kohlenstoff-Kohlenstoff-Doppelbindungen des Oligoimids (a) zwischen 0,01 und 1,1 und vorzugsweise zwischen 0,05 und 1,1 ist,
andererseits :
das molare Verhältnis zwischen der aromatischen Verbindung (b) und dem Polyamin (c) zwischen 0,02 und 50 und vorzugsweise zwischen 0,05 und 20 liegt.

15. Herstellungsverfahren gemäß einem der Ansprüche 11 bis 14, dadurch gekennzeichnet, daß es darin besteht, die Reaktionsteilnehmer zwischen 50 und 200 °C zu erhitzen, um zunächst ein Präpolymeres (P) zu bilden und dann das Erhärten des Präpolymeren (P) durch Erhitzen auf eine Temperatur zwischen 150 und 300 °C hervorzurufen.

16. Herstellungsverfahren gemäß den Ansprüchen 13, 14 und 15, dadurch gekennzeichnet, daß es darin besteht, ausgehend von dem Oligoimid (a) und der aromatischen Verbindung (b) ein Präpolymeres (PP) zu bilden, dann dieses Präpolymere (PP) mit dem Polyamin (c) zu vermischen, um das Präpolymere (P) zu erhalten.

17. Herstellungsverfahren gemäß den Ansprüchen 13, 14 und 15, dadurch gekennzeichnet, daß es darin besteht, aus dem Oligoimid (a) und dem Polyamin (c) ein Präpolymeres (PP) zu bilden, dann dieses Präpolymere (PP) mit der aromatischen Verbindung (b) zu vermischen, um das Präpolymere (P) zu erhalten.

18. Anwendung der Polymeren gemäß einem der Ansprüche 1 bis 10 zur Bildung geformter Gegenstände, von Überzügen und Erzeugnissen mit Zellstruktur.